# EUROPEAN PATENT APPLICATION

(11) **EP 3 312 720 A1**
(43) Date of publication of application: **25.04.2018**
(21) Application number: 16810956.9
(22) Date of filing: 12.06.2016
(51) Int. Cl.: G06F 9/44

(54) **METHOD AND DEVICE FOR PREVIEWING DYNAMIC IMAGE, AND METHOD AND DEVICE FOR DISPLAYING EXPRESSION PACKAGE**

(30) Priority: 19.06.2015 CN 201510346514
(71) Applicant: Alibaba Group Holding Limited, Grand Cayman (KY)
(72) Inventor: ZHU, Zhiqiang, Hangzhou 310099 (CN)
(74) Representative: Conroy, John
(86) International application number: PCT/CN2016/085400
(87) International publication number: WO 2016/202215

(57) **Abstract**

The present application provides a method and a device for previewing a dynamic image, and a method for displaying an expression package. The dynamic image includes several frames of static image data. The method for previewing a dynamic image includes: extracting at least one frame of static image data having a designated frame number from the dynamic image; and displaying the extracted static image data. By means of the technical solution of the present application, a preview image does not need to be downloaded when the dynamic image is previewed. When the method is applied to an expression package, the size of an expression package installation file can be reduced, and network traffic is saved. Moreover, the workload of expression package creating personnel can be reduced, and the expression package creating efficiency is improved.

## Description

The present application claims priority to Chinese Patent Application No. 201510346514.7, filed on June 19, 2015 and entitled "METHOD AND DEVICE FOR PREVIEWING DYNAMIC IMAGE, AND METHOD AND DEVICE FOR DISPLAYING EXPRESSION PACKAGE", which is incorporated herein by reference in its entirety.

### Technical Field

The present application relates to the field of image processing technologies, and in particular, to a method and a device for previewing a dynamic image, and a method and a device for displaying an expression package.

### Background Art

Online socializing has become an indispensable part of people's life as the Internet develops. Various kinds of social software provide a variety of expression input functions, helping people to express their emotions more vividly and accurately online. Expressions become a core competitiveness of social software.

Compared with static expressions, dynamic expressions are much more popular because they are more vivid and interesting. When dynamic expressions are used, generally multiple dynamic expressions in an expression package are previewed first, and a to-be-used dynamic expression is selected from a preview page. In the prior art, each dynamic expression in an expression package installation file corresponds to two files, including a dynamic image and a preview image that are used for using and previewing the dynamic expression respectively. In other words, two images are needed to accomplish use of the whole dynamic expression. In this way, two images are required to be prepared when an expression package is created, the workload is high, and an expression package installation file has an overlarge size, resulting in more network traffic consumed during downloading.

### Summary of the Invention

In view of this, the present application provides a method for previewing a dynamic image, wherein the dynamic image includes several frames of static image data; and the method includes:
extracting at least one frame of static image data having a designated frame number from the dynamic image; and
displaying the extracted static image data.

The present application provides a method for displaying an expression package, wherein the expression package has at least one dynamic expression including several frames of static image data; and the method includes:
extracting at least one frame of static image data having a designated frame number from a to-be-displayed dynamic expression; and
displaying the dynamic expression by using the extracted static image data.

The present application further provides a device for previewing a dynamic image, wherein the dynamic image includes several frames of static image data; and the device includes:
an image data extraction unit configured to extract at least one frame of static image data having a designated frame number from the dynamic image; and
an image data displaying unit configured to display the extracted static image data.

The present application provides a device for displaying an expression package, wherein the expression package has at least one dynamic expression including several frames of static image data; and the device includes:
an expression data extraction unit configured to extract at least one frame of static image data having a designated frame number from a to-be-displayed dynamic expression; and
an expression data displaying unit configured to display the dynamic expression by using the extracted static image data.

It can be seen from the above technical solutions that, in the embodiments of the present application, static image data in a dynamic image or a dynamic expression is extracted for displaying, such that it is unnecessary to download a preview image during previewing of the dynamic image or displaying of the dynamic expression. When the technical solution is applied to an expression package, the size of an expression package installation file can be reduced, and network traffic is saved. Moreover, the workload of expression package creating personnel can be reduced, and the expression package creating efficiency is improved.

### Brief Description of the Drawings

FIG. 1 is a flowchart of a method for previewing a dynamic image according to an embodiment of the present application;
FIG. 2 is a flowchart of a method for displaying an expression package according to an embodiment of the present application;
FIG. 3 is a flowchart of previewing of a dynamic expression in an expression package according to an application example of the present application;
FIG. 4 is a hardware structural diagram of a device applying an embodiment of the present application;
FIG. 5 is a logic structural diagram of a device for previewing a dynamic image according to an embodiment of the present application; and
FIG. 6 is a logic structural diagram of a device for displaying an expression package according to an embodiment of the present application.

### Detailed Description

A dynamic image is generally formed by combining a plurality of static images having different content. The dynamic image includes image data of these static images. The image data of each static image is a frame, and a dynamic effect is presented by displaying the static image data frame by frame. A preview image of the dynamic image is generally one of the static images, and the image data of the static image has been included in the dynamic image. In other words, image data of a preview image of a dynamic expression in an expression package is repeated information, and the size of an installation file may be reduced by removing the repeated information.

Embodiment 1 of the present application provides a new method for previewing a dynamic image, which performs previewing by using partial static image data in the dynamic image. When the method is used for previewing a dynamic expression of an expression package, previewing may be implemented on a device of a user by using the dynamic expression itself, thus reducing the size of an expression package installation file and reducing the workload during creating of the expression package, to solve the problems in the prior art.

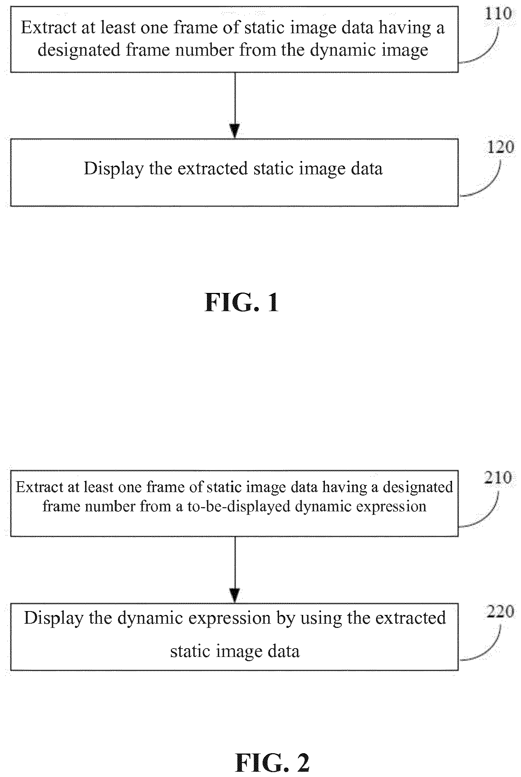

Embodiment 1 of the present application is applied to a device that can acquire a dynamic image and preview the dynamic image. The device may be any device having computing and storage functions, such as a mobile phone, a tablet computer, a Personal Computer (PC), a notebook, and a server. A flowchart of a method for previewing a dynamic image according to Embodiment 1 of the present application is as shown in FIG. 1.

Step 110: At least one frame of static image data having a designated frame number is extracted from the dynamic image.

A dynamic image acquired from the Internet in real time may be used, or a dynamic image stored in the device locally may be used. The dynamic image includes at least two frames of static image data. Each frame of static image data has a respective frame number. During displaying of the dynamic image, a dynamic effect may be presented when images corresponding to the static image data are displayed according to the order of frame numbers. Multiple specific implementations of extracting static image data having a frame number or some frame numbers from a dynamic image are provided in a variety of existing image processing software, and are not repeated here.

In this embodiment, a designated frame number may be a single frame number, a single frame of static image data is extracted, and at this time, the previewing effect is dynamic. The designated frame number may also be two or more frame numbers, two or more frames of static image data are extracted, and at this time, the previewing effect is dynamic.

The designated frame number may be determined in various manners according to different application scenarios of using the preview image. For example, when a predetermined condition is met (for example, when software or an application that needs to preview a dynamic image is started to run, a user uses a dynamic image previewing function, or the like), an issued frame number of the dynamic image is acquired from the Internet by using a preset address, and the issued frame number is used as the designated frame number. A built-in frame number of the dynamic image may be stored locally, and the built-in frame number is used as the designated frame number (for a dynamic expression in an expression package, a built-in frame number corresponding to each dynamic expression may be carried in an installation file, and the built-in frame number is stored locally during installation). Moreover, a default frame number may be set, and the default frame number is used as the designated frame number.

The manner of acquiring an issued frame number from the Internet by using a preset address can control previewing effects of dynamic images in a concentrated manner at the network side. A displayed preview image may be modified as required without changing setting of each client terminal; however, the previewing is delayed when the network speed is relatively slow. The manner of using a locally stored built-in frame number can avoid impact of network conditions on previewing of the dynamic images, thus having high operating efficiency and saving traffic. However, it is necessary to pre-configure a corresponding built-in frame number for each dynamic image. The manner of using a default frame number also has high operating efficiency and saves traffic. Moreover, the manner is simple in implementation, and is compatible with previewing implementation of previous dynamic images (dynamic images without issued frame numbers provided by the network side or pre-configured built-in frame numbers). However, it is difficult to display characteristics of each dynamic image accurately.

The above three manners of determining a designated frame number may be used in combination to take advantages of different manners and reduce effects of their defects as much as possible. For example, the built-in frame number and the default frame number are combined. A built-in frame number of a dynamic image is searched for locally, and if it is found, the locally stored built-in frame number of the dynamic image is used as the designated frame number; if it is not found, a default frame number is used as the designated frame number of the dynamic image. For another example, the issued frame number and the default frame number are combined. An issued frame number of a dynamic image is acquired from the Internet by using a preset address, to serve as the designated frame number of the dynamic image; and if the issued frame number of the dynamic image cannot be acquired from the Internet, a default frame number is used as the designated frame number of the dynamic image.

In an example, a designated frame number may be determined by combining the above three manners. An issued frame number of a dynamic image is acquired from the Internet by using a preset address, to serve as the designated frame number of the dynamic image; if the issued frame number of the dynamic image cannot be acquired from the Internet, a locally stored built-in frame number of the dynamic image is used as the designated frame number; and if the locally stored built-in frame number of the dynamic image is not found, a default frame number is used as the designated frame number of the dynamic image.

The quantities of static image frames included in different dynamic images may vary significantly. As a result, a rule may be set for the designated frame number, such that it is more convenient to set the default frame number, and a previewing failure caused by a wrong frame number can be avoided at the same time. For example, frame numbers of static image data in a dynamic image generally ascend from 1 to M (M is a natural number), and the rule of the designated frame number may be set as follows: 0 and/or -1 in the designated frame number represents the last frame; N (N is a natural number) in the designated frame number represents the N^{th} frame if N is not greater than the frame number of the last frame of the dynamic image, and represents the last frame if N is greater than the frame number of the last frame of the dynamic image. In this way, the default frame number may be 1 such that the first frame is used for previewing, may be 0 or -1 such that the last frame is used for previewing, and may also be (1, 0) or (1, -1) such that a dynamic image formed by the first frame and the last frame is used for previewing. Moreover, a dynamic image can still be previewed even if an issued frame number, a built-in frame number or a default frame number exceeds the maximum frame number of the dynamic image.

Step 120: The extracted static image data is displayed.

The static image data extracted in Step 110 is displayed to the user as image data in a preview image. Such a function can be implemented by using various types of system software and image processing application software in the prior art, and will not be described in detail.

In an implementation, a preview image may be generated according to static image data extracted from a dynamic image, and the generated preview image is cached. When the dynamic image is previewed, a cache may be searched to check whether the preview image of the dynamic image is stored therein, and if yes, the cached preview image is displayed; if no, Step 110 and Step 120 are performed to extract and display the static image data, generate a preview image according to the extracted static image data, and store the preview image into the cache.

If the designated frame number is a single frame number, a static preview image is generated by using the extracted single frame of static image data. If the designated frame number is two or more frame numbers, a dynamic preview image is generated by using the extracted two or more frames of static image data. A variety of specific implementations of generating a static preview image by using a single frame of static image data and generating a dynamic preview image by using more than one frame of static image data have been provided in various types of existing image processing software, and they are all available and will not be described in detail.

When the dynamic image needs to be previewed, the preview image of the dynamic image in the cache may be displayed for the user. An existing static player may be called to display a static preview image, and an existing dynamic player may be called to display a dynamic preview image. Moreover, an existing image player supporting both dynamic images and static images may be used to display the preview image. This is not limited in this embodiment.

For a device having a large-capacity non-volatile storage space, a cache region of the preview image may be set in a non-volatile storage to reduce the processing time of generating the preview image and improve the efficiency of previewing the dynamic image.

As can be seen, in Embodiment 1 of the present application, a static or dynamic previewing function is implemented by using the static image data in the dynamic image. When the method is applied to an expression package, it is unnecessary to configure a corresponding preview image for each dynamic image in an installation file, thus reducing the size of the expression package installation file and saving network traffic consumed by downloading the installation file. Moreover, installation package creating personnel does not need to generate a preview image for each dynamic expression, thus reducing the workload during creating of the expression package and improving the creating efficiency.

Embodiment 2 of the present application provides a new method for displaying expression package, which displays a dynamic expression by using partial static image data in the dynamic expression. In this way, when an expression in an expression package is displayed on a device of a user, the displaying may be implemented by using the dynamic expression itself, thus reducing the size of an expression package installation file and reducing the workload during creating of the expression package, to solve the problems in the prior art.

Embodiment 2 of the present application is applied to a device that downloads an expression package installation file and completes the expression package. The device may be any device having computing and storage functions. After installation of the expression package is completed, when the user selects the expression package, the device displays the expression package to the user, for the user to preview expressions therein.

In Embodiment 2, the expression package installation file and an expression package file on the device after the installation include at least one dynamic expression, but do not include a preview expression corresponding to each dynamic expression. Each dynamic expression is a dynamic image including at least two frames of static image data having respective frame numbers. In Embodiment 2 of the present application, a procedure of the method for displaying an expression package is as shown in FIG. 2.

Step 210: At least one frame of static image data having a designated frame number is extracted from a to-be-displayed dynamic expression.

According to the quantity of expressions in the expression package and an interface design of social software using expressions, expressions displayed to the user each time may be all expressions or partial expressions in the expression package. At least one frame of static image data is extracted for the to-be-displayed dynamic expression according to the designated frame number. The designated frame number may be a single frame number used for displaying an expression statically. The designated frame number may also be two or more frame numbers used for displaying an expression dynamically.

The designated frame number may be determined in various manners. An issued frame number of the dynamic expression acquired from the Internet, a built-in frame number of the dynamic expression included in the expression package, or a default frame number may be used as the designated frame number.

For the issued frame number, a preset address for downloading the issued frame number may be pre-configured in the expression package. Alternatively, a preset address for acquiring the issued frame number may be built in social software using the expression package, and an issued frame number of each dynamic expression may be acquired by using a global expression identifier (a unique identifier possessed by each expression among all expressions) or an in-package expression identifier (a unique identifier of each expression in the expression package where the expression locates) + an expression package identifier (a unique identifier of the expression package among all expression packages).

For the built-in frame number, a built-in frame number corresponding to each dynamic expression may be included in an expression package installation file, and after the expression package is installed, the built-in frame number of each dynamic expression is stored in the local expression package of the device.

For the default frame number, a used default frame number may be set for the expression package or for social software using the expression package.

The designated frame number may be determined by combining the above three frame numbers. Specifically, an issued frame number of a dynamic expression is acquired from the Internet based on a preset address, to serve as the designated frame number; if the issued frame number of the dynamic expression cannot be acquired, a built-in frame number of the dynamic expression included in the expression package is used as the designated frame number; and if the built-in frame number of the dynamic expression is not found, a default frame number is used as the designated frame number of the dynamic expression.

For advantages and disadvantages when the above three frame numbers are used as the designated frame number respectively, please refer to illustration of Embodiment 1. Moreover, a manner of determining the designated frame number by using two or three of the above three frame numbers in combination as well as achievable technical effects may also be obtained with reference to Embodiment 1. Moreover, a certain rule may also be set for the designated frame number in this embodiment. Please refer to Embodiment 1 for details, and they will not be repeated.

Step 220: The dynamic expression is displayed by using the extracted static image data.

As expression packages generally need to be displayed in social software frequently, a preview expression corresponding to a dynamic expression may be generated according to static image data extracted from the dynamic expression, and the generated preview expression is then cached. When the expression package is displayed, for a to-be-displayed dynamic expression, the cache is searched to check whether there is a preview expression corresponding to the dynamic expression. If yes, the dynamic expression is displayed by using the corresponding preview expression; if no, Steps 210 and 220 are performed to extract and display static image data, generate a preview expression according to the extracted dynamic image data, and store the preview expression into the cache.

In an implementation, the cache may be set in an expression package stored in the device locally. In this way, a preview expression is generated for each dynamic expression when the dynamic expression is displayed for the first time, and the preview expression may be used to display the expression package in subsequent displays, thereby reducing the computing load of the device and improving the efficiency of displaying the expression package.

In Embodiment 2, an expression package is displayed by using static image data in a dynamic expression, and it is unnecessary to configure a corresponding preview expression for each dynamic expression in an expression package installation file, thus reducing the size of the expression package installation file and saving network traffic consumed by downloading the installation file. Moreover, installation package creating personnel does not need to generate a preview expression for each dynamic expression, thus reducing the workload during creating of the expression package and improving the creating efficiency.

In an application example of the present application, a social application (App) on an Android terminal of a user downloads and installs an expression package, the expression package including a dynamic image of each dynamic expression and a network address for acquiring a download frame number of the dynamic image, but not including a preview image of the dynamic expression. The social App sets a cache region for the preview image.

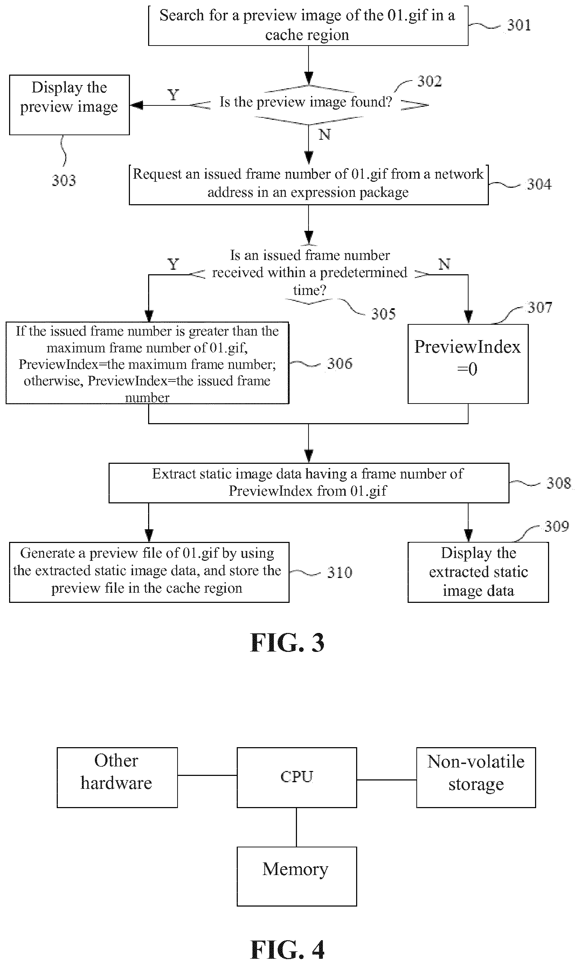

After the user clicks a label of the expression package in the social App, preview images of several dynamic expressions in the expression package should be displayed on an interface. By taking a to-be-displayed dynamic expression 01.gif as an example, a procedure of previewing of a dynamic expression according to the application example is as shown in FIG. 3.

Step 301: A preview image of the dynamic expression 01.gif is searched for in the cache region.

Step 302: It is judged whether the preview image is found, and if yes, Step 303 is performed; otherwise, Step 304 is performed.

Step 303: The preview image of 01.gif is displayed on the interface, and the procedure ends.

Step 304: A network address in the expression package is acquired, and an issued frame number of 01.gif is requested from the network address.

Step 305: It is judged whether an issued frame number returned by the network address is received within a predetermined time, and if yes, Step 306 is performed; otherwise, Step 307 is performed.

Step 306: If the issued frame number is greater than a maximum frame number of 01.gif, the maximum frame number of 01.gif is used as a designated frame number PreviewIndex; otherwise, the issued frame number is used as a designated frame number, and the procedure proceeds to Step 308.

Step 307: A default frame number 0 is used as a designated frame number, where 0 represents the last frame of static image data of the dynamic image.

Step 308: An open source component GIFDrawable is invoked to load 01.gif into a memory, and static image data having the designated frame number is extracted.

Step 309: The extracted static image data is placed in an image container ImageView provided by the Android system, and the static image data is displayed by the ImageView to the user, to implement previewing of 01.gif.

Step 310: A preview file of 01.gif is generated by using the extracted static image data, and the generated preview file is stored in the cache region. In this way, when 01.gif needs to be previewed subsequently, the stored preview file may be read from the cache region and then displayed directly.

It should be noted that there is no sequential relationship between Step 309 and Step 310.

Corresponding to the implementation of the above procedure, an embodiment of the present application further provides a device for previewing a dynamic image. The device may be implemented through software, and may also be implemented through hardware or a combination of software and hardware. By using software implementation as an example, as a device in logic sense, it is formed by reading a corresponding computer program by a Central Process Unit (CPU) of a device where the device is located into a memory for running. From the perspective of hardware, in addition to the CPU, the memory and the non-volatile storage shown in FIG. 4, the device where the device for previewing a dynamic image is located generally further includes other hardware such as a chip for receiving and transmitting wireless signals, a board card used for implementing a network communication function, etc.

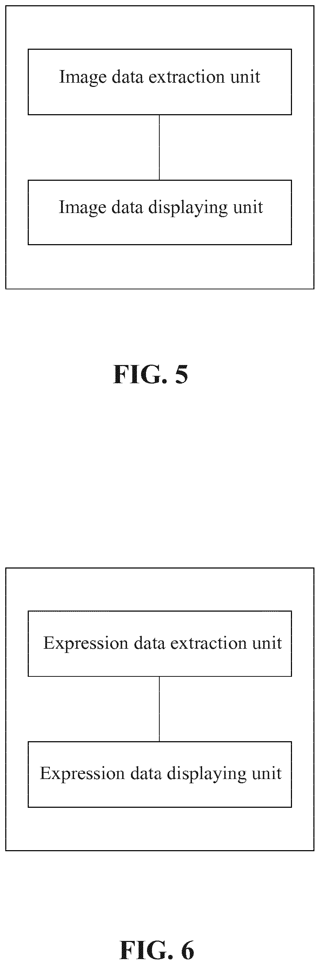

FIG. 5 shows a device for previewing a dynamic image according to an embodiment of the present application. The dynamic image includes several frames of static image data. The device includes an image data extraction unit and an image data displaying unit. The image data extraction unit is configured to extract at least one frame of static image data having a designated frame number from the dynamic image; and the image data displaying unit is configured to display the extracted static image data.

Optionally, the designated frame number includes: an issued frame number of the dynamic image acquired from the Internet, a locally stored built-in frame number of the dynamic image, or a default frame number.

Optionally, the device may further include a designated frame number unit configured to acquire the issued frame number of the dynamic image from the Internet based on a preset address, to serve as the designated frame number; if the issued frame number of the dynamic image cannot be acquired, use the locally stored built-in frame number of the dynamic image as the designated frame number; and if the built-in frame number of the dynamic image is not found, use the default frame number as the designated frame number of the dynamic image.

Optionally, in the designated frame number, 0 or -1 represents the last frame of static image data of the dynamic image. N in the designated frame number represents the N^{th} frame of static image data of the dynamic image if N is not greater than the maximum frame number of the dynamic image, and represents the last frame of static image data of the dynamic image if N is greater than the maximum frame number of the dynamic image. N is a natural number.

Optionally, the device may further include a preview image cache unit and a preview image displaying unit. The preview image cache unit is configured to generate a preview image according to the extracted static image data, and cache the generated preview image. The preview image displaying unit is configured to, when previewing the dynamic image, display the cached preview image if the preview image of the dynamic image is found in the cache.

Optionally, the dynamic image includes a dynamic expression in an expression package. An installation file of the expression package includes a built-in frame number that is corresponding to the dynamic expression and used as the designated frame number.

FIG. 6 shows a device for previewing a dynamic image according to an embodiment of the present application. The expression package has at least one dynamic image including several frames of static image data. The device includes an expression data extraction unit and an expression data displaying unit. The expression data extraction unit is configured to extract at least one frame of static image data having a designated frame number from the to-be-displayed dynamic expression; and the expression data displaying unit is configured to display the dynamic expression by using the extracted static image data.

Optionally, the designated frame number includes: an issued frame number of the dynamic expression acquired from the Internet, a built-in frame number of the dynamic expression included in the expression package, or a default frame number.

Optionally, the device further includes a designated frame number unit configured to acquire the issued frame number of the dynamic expression from the Internet based on a preset address, to serve as the designated frame number; if the issued frame number of the dynamic image cannot be acquired, use the built-in frame number of the dynamic expression included in the expression package as the designated frame number; and if the built-in frame number of the dynamic expression is not found, use the default frame number as the designated frame number of the dynamic expression.

Optionally, the device further includes a preview expression cache unit and a preview expression displaying unit. The preview expression cache unit is configured to generate a preview expression corresponding to the dynamic expression according to the extracted static image data, and cache the generated preview expression. The preview expression displaying unit is configured to, when a preview expression corresponding to the to-be-displayed dynamic expression is found, display the dynamic expression by using the preview expression.

The above descriptions are merely preferred embodiments of the present application, and are not intended to limit the present application. Any modification, equivalent replacement and improvement made within the spirit and principle of the present application shall fall within the protection scope of the present application.

In a typical configuration, a computing device includes one or more processors (CPU), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition of this text, the computer readable medium does not include transitory media, such as a modulated data signal and a carrier.

It should be further noted that, the term "include", "comprise" or other variations thereof are intended to cover non-exclusive inclusion, so that a process, method, commodity or device including a series of elements not only includes the elements, but also includes other elements not clearly listed, or further includes inherent elements of the process, method, commodity or device. Without more limitations, an element defined by "including a/an..." does not exclude that the process, method, commodity or device including the element further has other identical elements.

Those skilled in the art should understand that, the embodiments of the present application may be provided as a method, a system, or a computer program product. Therefore, the present application may be implemented as a completely hardware embodiment, a completely software embodiment, or an embodiment combining software and hardware. Moreover, the present application may be in the form of a computer program product implemented on one or more computer usable storage media (including, but not limited to, a magnetic disk memory, a CD-ROM, an optical memory and the like) including computer usable program code.

## Claims

1. A method for previewing a dynamic image, wherein the dynamic image comprises several frames of static image data, the method comprising:
extracting at least one frame of static image data having a designated frame number from the dynamic image; and
displaying the extracted static image data.

2. The method of claim 1, wherein the designated frame number comprises: an issued frame number of the dynamic image acquired from the Internet, a locally stored built-in frame number of the dynamic image, or a default frame number.

3. The method of claim 2, wherein the method further comprises: acquiring the issued frame number of the dynamic image from the Internet based on a preset address, to serve as the designated frame number; if the issued frame number of the dynamic image cannot be acquired, using the locally stored built-in frame number of the dynamic image as the designated frame number; and if the built-in frame number of the dynamic image is not found, using the default frame number as the designated frame number of the dynamic image.

4. The method of claim 1, wherein in the designated frame number, 0 or -1 represents the last frame of static image data of the dynamic image; N in the designated frame number represents the N^{th} frame of static image data of the dynamic image if N is not greater than the maximum frame number of the dynamic image, and represents the last frame of static image data of the dynamic image if N is greater than the maximum frame number of the dynamic image; and N is a natural number.

5. The method of claim 1, wherein the method further comprises: generating a preview image according to the extracted static image data, and caching the generated preview image; and
the method further comprises: when previewing the dynamic image, displaying the cached preview image if the preview image of the dynamic image is found in the cache.

6. The method of claim 1, wherein the dynamic image comprises a dynamic expression in an expression package; and an installation file of the expression package comprises a built-in frame number that is corresponding to the dynamic expression and used as the designated frame number.

7. A method for displaying an expression package, wherein the expression package has at least one dynamic expression comprising several frames of static image data, the method comprising:
extracting at least one frame of static image data having a designated frame number from a to-be-displayed dynamic expression; and
displaying the dynamic expression by using the extracted static image data.

8. The method of claim 7, wherein the designated frame number comprises: an issued frame number of the dynamic expression acquired from the Internet, a built-in frame number of the dynamic expression comprised in the expression package, or a default frame number.

9. The method of claim 8, wherein the method further comprises: acquiring the issued frame number of the dynamic expression from the Internet based on a preset address, to serve as the designated frame number; if the issued frame number of the dynamic expression cannot be acquired, using the built-in frame number of the dynamic expression comprised in the expression package as the designated frame number; and if the built-in frame number of the dynamic expression is not found, using the default frame number as the designated frame number of the dynamic expression.

10. The method of claim 7, wherein the method further comprises: generating a preview expression corresponding to the dynamic expression according to the extracted static image data, and caching the generated preview expression; and
the method further comprises: if a preview expression corresponding to the to-be-displayed dynamic expression is found in the cache, displaying the dynamic expression by using the preview expression.

11. A device for previewing a dynamic image, wherein the dynamic image comprises several frames of static image data, the device comprising:
an image data extraction unit configured to extract at least one frame of static image data having a designated frame number from the dynamic image; and
an image data displaying unit configured to display the extracted static image data.

12. The device of claim 11, wherein the designated frame number comprises: an issued frame number of the dynamic image acquired from the Internet, a locally stored built-in frame number of the dynamic image, or a default frame number.

13. The device of claim 12, wherein the device further comprises: a designated frame number unit configured to acquire the issued frame number of the dynamic image from the Internet based on a preset address, to serve as the designated frame number; if the issued frame number of the dynamic image cannot be acquired, use the locally stored built-in frame number of the dynamic image as the designated frame number; and if the built-in frame number of the dynamic image is not found, use the default frame number as the designated frame number of the dynamic image.

14. The device of claim 11, wherein in the designated frame number, 0 or -1 represents the last frame of static image data of the dynamic image; N in the designated frame number represents the N^{th} frame of static image data of the dynamic image if N is not greater than the maximum frame number of the dynamic image, and represents the last frame of static image data of the dynamic image if N is greater than the maximum frame number of the dynamic image; and N is a natural number.

15. The device of claim 11, wherein the device further comprises: a preview image cache unit configured to generate a preview image according to the extracted static image data, and cache the generated preview image; and
the device further comprises: a preview image displaying unit configured to, when previewing the dynamic image, display the cached preview image if the preview image of the dynamic image is found in the cache.

16. The device of claim 11, wherein the dynamic image comprises a dynamic expression in an expression package; and an installation file of the expression package comprises a built-in frame number that is corresponding to the dynamic expression and used as the designated frame number.

17. A device for displaying an expression package, wherein the expression package has at least one dynamic expression comprising several frames of static image data, the device comprising:
an expression data extraction unit configured to extract at least one frame of static image data having a designated frame number from a to-be-displayed dynamic expression; and
an expression data displaying unit configured to display the dynamic expression by using the extracted static image data.

18. The device of claim 17, wherein the designated frame number comprises: an issued frame number of the dynamic expression acquired from the Internet, a built-in frame number of the dynamic expression comprised in the expression package, or a default frame number.

19. The device of claim 18, wherein the device further comprises: an expression designated frame number unit configured to acquire the issued frame number of the dynamic expression from the Internet based on a preset address, to serve as the designated frame number; if the issued frame number of the dynamic image cannot be acquired, use the built-in frame number of the dynamic expression comprised in the expression package as the designated frame number; and if the built-in frame number of the dynamic expression is not found, use the default frame number as the designated frame number of the dynamic expression.

20. The device of claim 17, wherein the device further comprises: a preview expression cache unit configured to generate a preview expression corresponding to the dynamic expression according to the extracted static image data, and cache the generated preview expression; and
the device further comprises: a preview expression displaying unit configured to, if a preview expression corresponding to the to-be-displayed dynamic expression is found in the cache, display the dynamic expression by using the preview expression.
